# EUROPEAN PATENT APPLICATION

(11) **EP 1 704 977 A1**
(43) Date of publication of application: **27.09.2006**
(21) Application number: 04820981.1
(22) Date of filing: 09.11.2004
(51) Int. Cl.: B29B 9/12, B29B 7/88, B29B 11/14, C08L 23/00, C08L 77/00

(54) **METHOD FOR PRODUCING POLYOLEFIN-POLYAMIDE RESIN COMPOSITION**

(30) Priority: 26.12.2003 JP 2003432281
(71) Applicant: Ube Industries, Ltd., Ube City, Yamaguchi 755-8633 (JP)
(72) Inventor: KAWAGUCHI, Norishige, Chiba-shi, Chiba2610012 (JP); YAMAGUCHI, Masashi, 0000 (JP)
(74) Representative: Bublak, Wolfgang
(86) International application number: PCT/JP2004/016577
(87) International publication number: WO 2005/065908

(57) **Abstract**

The invention provides a method of manufacturing polyolefin-polyamide resin composition, which method has a large amount of discharge and is capable of long-time running and excellent in productivity. The method of manufacturing polyolefin-polyamide resin compositions comprises melting and kneading, extruding, and drafted drawing or rolling (a) a polyolefin, (b) a polyamide, (c) a silane coupling agent, (d) a first antioxidant with a melting point of 70-170 °C, and (e) a second antioxidant with a melting point of 180-300 °C to disperse the polyamide (b) in the form of fiber with an average fiber diameter of 1 µm or less in the polyolefin (a) to finish the composition in the form of pellets.

## Description

### BACKGROUND OF THE INVENTION

### Field of the Invention

The present invention relates to a method of manufacturing polyolefin-polyamide resin composition suitably available in materials for reinforcing rubbers and resins.

### Description of the Related Art

For improvements in elastic modulus and mechanical strength of rubbers and resins, glass fibers or inorganic fillers are combined. Although the combination of these materials may provide improvements in stiffness, elastic modulus, strength, and creep-resistance, it worsens appearances of moldings and results in heavy moldings.

Japanese patent publications Nos. JP-A 7-238189 and JP-A 9-59431 disclose composition, which comprise thermoplastic polyamide fiber dispersed as fine fiber in a matrix of polyolefin and rubber-like polymer. These composition can be improved in mechanical property when a rubber is combined. The rubber to be combined is limited, however, and may be gelled while kneading. In particular, it has a trend in easily gelling at higher temperatures, which may prevent expression of original properties such as strength, elongation, and elastic modulus.

On the other hand, as a method of manufacturing polyamide ultra-thin fiber, Japanese patent publication No. JP-A 63-75108 discloses a multi-component fiber as a basic component for leather, in which a boundary between gathered inner and outer layers has a specific range. Japanese patent publication No. JP-A 54-73921 discloses a polyamide ultra-thin fiber with a thickness of 0.1 denier, which is derived from a mixed high-speed spun strand produced by mixed high-speed spinning of polyamide and subjected to solvent removing polystyrene and polyethylene glycol. Japanese patent publications Nos. JP-A 3-279419, JP-A 4-272222 and JP-A 4-281015 disclose lightweight composite fiber, which cause no peeling at the interface between polypropylene and polyamide. They have an object to improve dye-affinity of polypropylene using core sheathe strands. These methods and strands have an object to obtain an ultra-thin strand with a thickness of 0.1-1 denier (d) by extracting through a small bore spinning nozzle, high-speed spinning, solvent processing, and melting. Accordingly, they are poor in productivity and can not be regarded as economical processes. In addition, these strands are continuous strands of ultra-thin strands and excellent materials for fabrics and synthetic leathers with nice luster and feeling. When they are filled and kneaded in a rubber or resin, however, they are hardly dispersed by kneading because they are continuous strands.

Japanese patent publication No. JP-A 11-106570 describes a polyolefin-polyamide resin composition, in which fine polyamide strands with an average strand diameter of 0.2-0.6 µm are uniformly dispersed in a polyolefin matrix and the polyolefin is bonded to the strand at the interface. The polyolefin-polyamide resin composition can be produced in the form of pellets and accordingly has easy dispersibility and reinforcing ability when it is kneaded in a rubber or resin. The polyolefin-polyamide resin composition described in Japanese patent publication No. JP-A 11-106570 is produced by melting and kneading, extruding, and drafted drawing or rolling (a) a polyolefin, (b) a polyamide, and (c) a silane coupling agent to disperse the polyamide (b) in the form of strands with an average strand diameter of 1 µm or less in the polyolefin (a) to finish the composition in the form of pellets. During the production, an antioxidant of pentaerithritol tetrakis[3-(3,5-di-t-butyl-4-hydroxyphenyl)propionate (Irganox 1010 available from Ciba Specialty Chemicals) is added.

### SUMMARY OF THE INVENTION

In the method of manufacturing polyolefin-polyamide resin composition described in Japanese patent publication No. JP-A 11-106570, an antioxidant with a melting point of 110 °C is employed. Such the antioxidant with a low melting point can not function sufficiently while kneading and reacting in a biaxial extruder. Therefore, gelation of polyolefin (decomposition when polypropylene is employed) occurs and causes scorches in the extruder, resulting in a small amount of discharge and a large amount of strand cut. It is also required to frequently clean a device for removing scorches from the extruder, which causes a problem associated with impossibility of long-time running and extremely bad productivity. In particular, cleaning for removal of scorches requires decomposition of devices such as the extruder and exerts a large influence on productivity

The present invention has an object to provide a method of manufacturing polyolefin-polyamide resin composition, which method has a large amount of discharge and is capable of long-time running and excellent in productivity

In order to achieve the above object, the present invention provides a method of manufacturing polyolefin-polyamide resin composition, comprising melting and kneading, extruding, and drafted drawing or rolling (a) a polyolefin, (b) a polyamide, (c) a silane coupling agent, (d) a first antioxidant with a melting point of 70-170 °C, and (e) a second antioxidant with a melting point of 180-300 °C, preferably 200-300 °C, more preferably 200-290 °C to disperse the polyamide (b) in the form of fiber with an average fiber diameter of 1 µm or less in the polyolefin (a) to finish the composition in the form of pellets.

As described above, in the method of manufacturing polyolefin-polyamide resin composition according to the present invention, the two antioxidants of components (d) and (e) are combined. This combination can provide a method of manufacturing polyolefin-polyamide resin compositions, which method has a large amount of discharge and is capable of long-time running and excellent in productivity.

### DETAILED DESCRIPTION OF THE INVENTION

In the method of manufacturing polyolefin-polyamide resin compositions according to the present invention, the component (a) is a polyolefin, preferably, with a melting point falling within 80-250 °C. Preferably, those having a Vicat softening point of 50 °C or higher, more preferably 50-200 °C may be employed. Such suitable examples include homopolymers or copolymers of an olefin having 2-8 carbon atoms; and copolymers of an olefin having 2-8 carbon atoms with an aromatic vinyl compound such as styrene, chlorostyrene, and α-methyl styrene; copolymers of an olefin having 2-8 carbon atoms with a vinyl acetate; copolymers of an olefin having 2-8 carbon atoms with an acrylic acid or an ester thereof; copolymers of an olefin having 2-8 carbon atoms with a methacrylic acid or an ester thereof; and copolymers of an olefin having 2-8 carbon atoms with a vinyl silane compound, which are suitably employed.

Specific examples include high density polyethylene; low density polyethylene; linear low density polyethylene; polypropylene; ethylene-propylene block copolymers; ethylene-propylene random copolymers; poly 4-methylpentene-1; polybutene-1; polyhexene-1; ethylene-vinyl acetate copolymers; ethylene-vinyl alcohol copolymers; ethylene-acrylic acid copolymers; ethylene-methyl acrylate copolymers; ethylene-ethyl acrylate copolymers; ethylene-propyl acrylate copolymers; ethylene-butyl acrylate copolymers; ethylene-2-ethylhexyl acrylate copolymers; ethylene-hydroxyethyl acrylate copolymers; ethylene-vinyl trimethoxysilane copolymers; ethylene-vinyl triethoxysilane copolymers; ethylene-vinyl silane copolymers; ethylene-styrene copolymers; and propylene-styrene copolymers. In addition, polyolefin halides such as chlorinated polyethylene, brominated polyethylene and chlorosulfonated polyethylene may be employed preferably.

Particularly preferable examples of the polyolefin of component (a) include high density polyethylene (HDPE), low density polyethylene (LDPE), linear low density polyethylene (LLDPE), polypropylene (PP), ethylene-propylene block copolymers, ethylene-propylene random copolymers, ethylene-vinyl acetate copolymers (EVA), ethylene-ethyl acrylate copolymers (EEA), and ethylene-vinyl alcohol copolymers. In particular, most preferable examples have a melt flow index (MFI) of 0.2-50g/10 min and may be employed individually or in combination of two or more.

The component (b) is a thermoplastic polyamide having an amide group in the main chain (hereinafter referred to as polyamide), with a melting point falling within 135-350 °C and higher than the melting point of the polyolefin of component (a), preferably with a melting point of 160-265 °C. Such the component (b) includes as a preferable example a polyamide that provides tough fiber by extruding and drawing.

Specific examples of polyamide include nylon 6; nylon 66; nylon 6-nylon 66 copolymers; nylon 610; nylon 612; nylon 46; nylon 11; nylon 12; nylon MXD6; condensation polymers of xylylenediamine and adipic acid; condensation polymers of xylylenediamine and pimelic acid; condensation polymers of xylylenediamine and suberic acid; condensation polymers of xylylenediamine and azelaic acid; condensation polymers of xylylenediamine and sebacic acid; condensation polymers of tetramethylenediamine and terephthalic acid; condensation polymers of hexamethylenediamine and terephthalic acid; condensation polymers of octamethylenediamine and terephthalic acid; condensation polymers of trimethylhexamethylenediamine and terephthalic acid; condensation polymers of decamethylenediamine and terephthalic acid; condensation polymers of undecamethylenediamine and terephthalic acid; condensation polymers of dodecamethylenediamine and terephthalic acid; condensation polymers of tetramethylenediamine and isophthalic acid; condensation polymers of hexamethylene diamine and isophthalic acid; condensation polymers of octamethylenediamine and isophthalic acid; condensation polymers of trimethylhexamethylenediamine and isophthalic acid; condensation polymers of decamethylenediamine and isophthalic acid; condensation polymers of undecamethylene diamine and isophthalic acid; and condensation polymers of dodecamethylenediamine and isophthalic acid.

Particularly preferable examples of polyamide include nylon 6 (PA6), nylon 66 (PA66), nylon 12 (PA12), and nylon 6-nylon 66 copolymers, which may be employed individually or in combination of two or more. Preferably, these polyamides may have a molecular weight ranging between 10,000-200,000.

Specific examples of the silane coupling agent of component (c) include vinyl methoxy silane; vinyl triethoxy silane; vinyl tris(β-methoxyethoxy) silane; vinyl triacetyl silane; γ-methacryloxy propyl trimethoxy silane; β-(3,4-epoxy cyclohexyl) ethyl trimethoxy silane; γ-grycidoxy propyl trimethoxy silane; γ-grycidoxy propyl methyl dimethoxy silane; γ-grycidoxy propyl methyl diethoxy silane; γ-grycidoxy propyl ethyl dimethoxy silane; γ-grycidoxy propyl ethyl diethoxy silane; N-β-(aminoethyl) aminopropyl trimethoxy silane; N-β-(aminoethyl) aminopropyl triethoxy silane; N-β-(aminoethyl) aminopropyl methyl dimethoxy silane; N-β-(aminoethyl) aminopropyl ethyl dimethoxy silane; N-β-(aminoethyl) aminopropyl ethyl diethoxy silane; γ-aminopropyl triethoxy silane; N-phenyl-γ-aminopropyl trimethoxy silane; γ-[N-(β-methacryloxy ethyl)-N,N-dimethyl ammonium(chloride)] propyl methoxy silane; and styryl diamino silane. Among those, preferably available ones have an easily leaving group resulted from taking a hydrogen atom from an alkoxy group or the like, and/or, a polar group and a vinyl group.

Preferably, the silane coupling agent of component (c) is contained within a range of 0.1-5.5 weight parts, more preferably 0.2-3.0 weight parts, on the basis of 100 weight parts of the components (a) and (b). An amount of the silane coupling agent less than 0.1 weight part can not yield a high-strength composition. An amount of the silane coupling agent more than 5.5 weight parts can not yield a composition excellent in elastic modulus. An amount of the silane coupling agent less than 0.1 weight % yields only a low-strength composition because a strong bond can not be formed between the component (a) and the component (b). An amount of the silane coupling agent more than 5.5 weight %, on the other hand, yields only a composition with poor elastic modulus as well because the component (b) can not turn in excellent fine fiber.

When the silane coupling agent or component (c) is employed, an organic peroxide may be used together. The use of the organic peroxide together promotes the reaction of the component (a) with the silane coupling agent because a radical is formed in the molecular chain of the component (a) and reacts with the silane coupling agent. The usage of the organic peroxide is 0.01-1.0 weight part on the basis of 100 weight parts of the component (a). Preferably available organic peroxides have such a half value period temperature for minute that is a temperature equal to higher one of the melting point of the component (a) and the melting point of the component (c), or within a temperature range about 30 °C higher than this temperature. Specifically, those having a half-life temperature per minute falling within 110-200 °C may be employed preferably.

Specific examples of the organic peroxide include di-α-cumyl peroxide; 1,1-di-t-butylperoxy-3,3,5-trimethyl cyclohexane; 1,1-di-t-butylperoxy cyclohexane; 2,2-di-t-butylperoxy butane; n-butyl 4,4-di-t-butylperoxy valerinate; 2,2-bis-(4,4-di-t-butylperoxy cyclohexane)propane; 2,2,4-trimethyl pentylperoxy neodecanate; α-cumylperoxy neodecanate; t-butylperoxy neohexanate; t-butylperoxy pivalate; t-butylperoxy acetate; t-butylperoxy laurate; t-butylperoxy benzoate; and t-butylperoxy isophthlate. Among those, preferably available ones have such a half-life temperature per minute that is equal to a melting and kneading temperature or within a temperature range about 30 °C higher than this temperature, specifically a half-life temperature per minute falling within 80-260 °C.

The first antioxidant of component (d) has a melting point of 70-170 °C. Examples include pentaerythritol tetrakis[3-(3,5-di-t-butyl-4-hydroxyphenyl)propionate; 2,6-di-t-butyl-4-(4,6-bis(octylthio)-1,3,5-triazine-2-yl amino)phenol; 2,2' -methylene bis(4-methyl-6-t-butylphenol); 4,4'-thiobis(3-methyl-6-t-butylphenol); 2-[1-(2-hydroxy-3,5-di-t-pentyl phenyl)ethyl]-4,6-di-t-pentylphenylacryl; and 2-t-butyl-6-(3-t-butyl-2-hydroxy-5-methyl benzyl)-4-methylphenylacryl. Preferably, the first antioxidant of component (d) is contained within a range of 0.01-5 weight parts, more preferably 0.05-2 weight parts, on the basis of 100 weight parts of the components (a) and (b).

The second antioxidant of component (e) has a melting point of 180-300 °C, preferably 200-300 °C, and more preferably 200-290 °C. Examples include 4,4'-butylidene bis(3-methyl-6-t-butylphenol); 2-mercaptobenzoimidazole; 3,3',3",5,5',5"- hexa-t-butyl-a,a'a"-(mesitylene-2,4,6-tiryl)tri-p-cresol; 1,3,5-tris(3,5-di-t-butyl-4-hydroxybenzyl)-1,3,5-triazine-2,4,6(1H,3H,5H)-trione; tri-(3,5-di-t-butyl-4-hydroxy benzyl)-isocyanurate; 1,1,3-tris-(2-methyl-4-hydroxy-5-t-butyl phenyl)butane; 4,4'-butylidene bis(3-methyl-6-t-butylphenol); and 1,3,5-trimethyl-2,4,6-t-(3,5-di-t-butyl-4-hydroxy benzyl)benzene. Preferably, the second antioxidant or component (e) is contained within a range of 0.01-5 weight parts, more preferably 0.05-2 weight parts, on the basis of 100 weight parts of the components (a) and (b).

As described above, in the method of manufacturing polyolefin-polyamide resin composition according to the present invention, two antioxidants are employed as the components (d) and (e). In particular, the antioxidant or component (e) is employed. Thus, it is possible to prevent gelation and decomposition of polyolefin while kneading and reacting of polyolefin-polyamide and improve the amount of discharge. It is also possible to reduce strand cut and hardly cause scorches in the extruder. Accordingly, it is possible to extremely reduce cleanings for removal of scorches and perform long-time running with an extremely improved productivity In particular, as the cleaning for removal of scorches requires dismantlement of the extruder, a reduction in the need for cleaning can improve the productivity extremely.

Preferably, the method of manufacturing polyolefin-polyamide resin composition according to the present invention may comprise a first step of melting and kneading the polyolefin of component (a), the silane coupling agent of component (c), the first antioxidant of component (d), and the second antioxidant of component (e) for chemical modification; a second step of melting and kneading the polyamide of component (b) at a melting point of the component (b) or higher into the component (a) chemically modified in the first step; a third step of melting and kneading the polyamide of component (b) for chemical modification at the melting point of the component (b) or higher into the component (a) chemically modified in the first step and extruding a product; a fourth step of drafted drawing or rolling the extruded product molten and kneaded and chemically modified in the third step, at a temperature higher than a melting point of the component (a) and lower than the melting point of the component (b); and a step of pelletizing a composition drawn or rolled in the fourth step, by cooling down the composition to room temperature.

In the first step, the melting and kneading temperature is preferably above the melting point of the component (a), and more preferably 30 °C higher than the melting point. Melting and kneading at a temperature 30 °C higher than the melting point can chemically modify it through reaction with the silane coupling agent of component (c). Melting and kneading can be performed in a device usually employed for kneading a resin or rubber. Such devices include a Banbury mixer, a kneader, a kneader/extruder, an open roll, a uniaxial kneader, and a biaxial kneader. The biaxial kneader is most preferable among these devices because it is capable of melting and kneading continuously in a short time.

In the second step, the melting and kneading temperature is preferably above the melting point of the component (b), and more preferably 10 °C higher than the melting point. If the melting and kneading temperature is lower the melting point of the component (b), it can not be kneaded and dispersed in the form of fiber. Accordingly, melting and kneading is performed at a temperature higher than the melting point, and more preferably at a 20 °C higher temperature.

In the third step, the kneaded product obtained at the step of extruding is extruded preferably through a spinning nozzle, an inflation die or a T-die. It is required to implement both spinning and extruding at a temperature higher than the melting point of the component (b). Specifically, it is implemented at a temperature higher than the melting point of the component (b), preferably a temperature range 30 °C higher than this temperature. Even if melting and kneading is performed at a temperature lower than the melting point of the component (b) in this step, the kneaded product is not structured to contain fine particles of the component (b) dispersed in a matrix of the component (a). Therefore, even spinning and drawing such the kneaded product can not turn the component (b) in fine fiber.

In the fourth step, the extruded product is spun in the form of a string or yarn through continuous processes of cooling and drawing or rolling. The processes of cooling and drawing or rolling are implemented at a temperature 10 °C lower than the melting point of the component (b). More preferably, drawing and rolling can form much tougher fiber and accordingly exert the property as a fiber-reinforcing resin composition. Drawing or rolling is implemented, for example, by extruding the kneaded product through a spinning nozzle to spin it in the form of a string or yarn, and drafted winding it around a bobbin. Alternatively, it may be implemented by a method of cutting it into pellets. "Drafted" is herein defined as determination of a winding speed higher than a spinning nozzle speed. A ratio of the winding speed to the spinning nozzle speed (draft ratio) is determined preferably within 1.5-100, more preferably within 2-50, and most preferably within 3-30.

In the fifth step, pelletizing allows for uniform kneading even if a resin or rubber component is added. Therefore, preferably pellets may be employed as the polyolefin-polyamide resin composition. The use of the resin composition in the form of pellets allows the resin composition to be kneaded together with an elastomer uniformly to easily produce a reinforced elastomer composition with fine fiber uniformly dispersed therein.

The first through third steps are described separately on a step basis. To the contrary, the use of a biaxial kneader having first through five inlets capable of supplying the components (a), (b), (c), (d) and (e) therethrough, and having first through five kneading belts corresponding to the inlets allows processing in a batch through continuous processes. To do so, the method becomes an economic, stable and safe method of manufacturing.

In the method of manufacturing polyolefin-polyamide resin composition according to the present invention, adjuvant such as carbon black, white carbon, active calcium carbonate, ultra particulate magnesium silicate, high styrene resin, phenol resin, lignin, modified melamine resin, coumarone indene resin, and oil resin; various fillers such as calcium carbonate, basic magnesium carbonate, clay, zinc flower, silious earth, recycled rubber, powdered rubber, and ebonite powder; stabilizer such as amine-aldehydes, amine-ketons, amines, phenols, imidazoles, sulfur-containing antioxidants, and phosphorous-containing antioxidants; and various pigment may be added appropriately.

### EXAMPLES

The present invention will be described in detail below with reference to examples and comparative examples though the invention is not limited in the scope of these examples. In the examples and comparative examples, the properties of the method of manufacturing polyolefin-polyamide resin compositions is measured as follows.

### Amount of Discharge:

Every two hours after the beginning of continuous running in the step of pelletizing subsequent to the fourth step, pellets are collected for one minute at a hopper chute opening of a pelletizer and weighted. This operation is repeated three times and an average thereof is calculated as an amount of discharge.

### Continuous Running Time:

A continuous running time is defined as a period after the time of supplying a silane modified polyolefin and a polyamide into a biaxial extruder (the beginning of running) until collection of products becomes impossible because of many occurrences of strand cut.

### Uniformity of Strand Diameter:

Part of strands is collected every two hours after the beginning of running and measured by a caliper.

### Cut of Strand:

The extruded strands may be cut by a tensile force while drafted drawing. The number of cut strands is evaluated by a ratio to the time.

### Generation of Gum:

The size of gums formed at the spinning nozzle is visually observed every 0.5 hour after the beginning of running.

### Scorch in Extruder:

After completion of continuous running, the biaxial extruder is dismantled to visually identify the state of scorch in the barrel and on the screw.

### Yield:

A percentage of (Amount of Produced Polyolefin-Polyamide Resin Composition) to (Total Amount of Prepared Silane Modified Polyolefin + Polyamide) from the beginning to the ending of continuous running is calculated as a yield.

### Daily Production:

An amount of products produced from the beginning to the ending of daily continuous running is measured as a production.

### Example 1

Added into 100 weight parts of a low density polyethylene [F522 available from Ube Industries, Ltd having a melting point of 110 °C, MFR = 5.0 (g/10 min.)] as the component (a) are: 1.0 weight part of a γ-methacryloxy propyl trimethoxy silane [KBM503 available from Shin-etsu Silicone] as the component (c); 0.5 weight part of a pentaerythritol tetrakis[3-(3,5-di-t-butyl-4-hydroxyphenyl) propionate [Irganox 1010 available from Ciba Specialty Chemicals having a melting point of 110 °C] as the component (d); 0.5 weight part of a 4,4'-butylidene bis(3-methyl-6-t-butylphenol) [Sumilizer BBMS available from Sumitomo Chemical Industry having a melting point of 209 °C] as the component (e); and 0.025 weight part of a di-α-cumyl peroxide [Percumyl D40]. They are kneaded in a Banbury mixer for reaction at 170 °C, and pelletized in a uniaxial extruder at 170 °C to produce a silane modified polyethylene. Into the produced silane modified polyethylene, 50 weight parts of nylon 6 [1030B available from Ube Industries, Ltd having a melting point of 215-225 °C] as the component (b) are supplied in a biaxial extruder. They are kneaded for reaction at 240 °C, extruded, then cooled in air, drawn with drawing rolls at a draft ratio of 7, and 1.5 times stretched between 5-inch rolls at room temperature for pelletization. The pelletized shape has a diameter of 1 mm and a length of 3 mm. Hot toluene is applied to the produced pellets to solve out polyethylene. No insolubles clings around the agitating fan, and the suspension is found uniform. The insoluble content is observed through a scanning electron microscope and found in the form of fine fiber with a diameter of 0.3 µm. Amount of Discharge, Continuous Running Time, Uniformity of Strand Diameter, Cut of Strand, Generation of Gum, Scorch in Extruder, Yield, and Daily Production at the time are shown in Table 1.

**Table 1**

| 1 | Example 1 | Example 2 | Comparative |
|---|---|---|---|
| | | | Example 1 |
| Amount of Discharge (Kg/hr) | 50 | 50 | 20 |
| Continuous Running Time (hr) | 24 or more | 24 or more | 8 |
| Uniformity of Strand Diameter | Uniform | Uniform | Non-uniform |
| Cut of Strand | Extremely little | Little | Many |
| Generation of Gum | Extremely little | Little | Much |
| Scorch in Extruder | Free | Free | Present |
| Yield (%) | 98 | 96 | 80 |
| Daily Production | 1176 | 1152 | 108 |

### Example 2

As the component (e), 0.5 weight part of a 2-mercaptobenzoimidazole [Sumilizer MB available from Sumitomo Chemical Industry having a melting point of 285 °C] is employed instead of 4,4'-butylidene bis(3-methyl-6-t-butylphenol). As the component (b), 50 weight parts of nylon 66 [2020B available from Ube Industries, Ltd having a melting point of 255-265 °C] is employed instead of nylon 6. The kneading and reacting temperature in the biaxial kneader is set at 300 °C. With these exceptions, a polyolefin-polyamide resin composition is produced in the same manner as in Example 1. Amount of Discharge, Continuous Running Time, Uniformity of Strand Diameter, Cut of Strand, Generation of Gum, Scorch in Extruder, Yield, and Daily Production at the time are shown in Table 1.

### Comparative Example 1

The component (e) is not added as the antioxidant and only 1.0 weight part of the antioxidant of component (d) is added. With this exception, a polyolefin-polyamide resin composition is produced in the same manner as in Example 1. Amount of Discharge, Continuous Running Time, Uniformity of Strand Diameter, Cut of Strand, Generation of Gum, Scorch in Extruder, Yield, and Daily Production at the time are shown in Table 1.

As shown in Table 1, Examples 1 and 2 with the component (e) added as the antioxidant result in little strand cut, large amounts of discharge, and free from scorch in the extruder compared to Comparative Example 1 with the component (e) not added. Accordingly, it is possible to extremely reduce cleanings inside the extruder to remove scorches, resulting in a long-time running, a larger yield, and a very greater daily production.

### Comparative Example 2

The component (d) is not added as the antioxidant and only 1.0 weight part of the antioxidant of component (e) is added. With this exception, a Banbury mixer is employed in kneading and reacting at 170 °C and a uniaxial kneader is then employed in pelletizing in the same manner as in Example 1. In this case, however, it is not possible to perform stable continuous pelletizing to produce a polyolefin-polyamide resin composition.

## Claims

1. A method of manufacturing polyolefin-polyamide resin composition, comprising melting and kneading, extruding, and drafted drawing or rolling (a) a polyolefin, (b) a polyamide, (c) a silane coupling agent, (d) a first antioxidant with a melting point of 70-170 °C, and (e) a second antioxidant with a melting point of 180-300 °C to disperse the polyamide (b) in the form of fiber with an average fiber diameter of 1 µm or less in the polyolefin (a) to finish the composition in the form of pellets.

2. The method of manufacturing polyolefin-polyamide resin compositions according to claim 1, comprising:
a first step of melting and kneading the polyolefin of component (a), the silane coupling agent of component (c), the first antioxidant of component (d), and the second antioxidant of component (e) for chemical modification;
a second step of melting and kneading the polyamide of component (b) at a melting point of the component (b) or higher into the component (a) chemically modified in the first step;
a third step of melting and kneading the polyamide of component (b) for chemical modification at the melting point of the component (b) or higher into the component (a) chemically modified in the first step and extruding a product;
a fourth step of drafted drawing or rolling the extruded product molten and
kneaded and chemically modified in the third step, at a temperature higher than a melting point of the component (a) and lower than the melting point of the component (b); and
a step of pelletizing a composition drawn or rolled in the fourth step, by cooling down the composition to room temperature.
